# EUROPÄISCHE PATENTSCHRIFT

(11) **EP 3 452 328 B1**
(45) Veröffentlichungstag und Bekanntmachung des Hinweises auf die Patenterteilung: **09.10.2019**
(21) Anmeldenummer: 17757519.8
(22) Anmeldetag: 22.08.2017
(51) Int. Cl.: B60K 37/06, H04L 29/08, G06Q 30/06

(54) **SYSTEM MIT EINEM INFOTAINMENTSYSTEM**
SYSTEM WITH AN INFOTAINMENT SYSTEM
SYSTÈME AVEC UN SYSTÈME D'INFORMATION ET DE DIVERTISSEMENT

(30) Priorität: 29.08.2016 DE 102016216228; 14.10.2016 EP 16193862
(43) Veröffentlichungstag der Anmeldung: 13.03.2019
(73) Patentinhaber: Audi AG, 85045 Ingolstadt (DE)
(72) Erfinder: MITTAG, Björn, 86673 Unterstall (DE); DALKE, Christoph, 85110 Kipfenberg (DE); PAFFEN, Matthijs, 85123 Karlskron (DE); GRUBER, Hans Georg, 85049 Ingolstadt (DE)
(86) Internationale Anmeldenummer: PCT/EP2017/071099
(87) Internationale Veröffentlichungsnummer: WO 2018/041664

(56) Entgegenhaltungen:
- WO-A1-2013/106329
- US-A1- 2015 100 633
- US-A1- 2015 307 106

## Beschreibung

Die Erfindung betrifft ein System, das eine Vorrichtung und ein Infotainmentsystem umfasst, und ein Verfahren zum Betreiben einer Vorrichtung und eines Infotainmentsystems.

Ein Infotainmentsystem kann in einem Kraftfahrzeug angeordnet und dazu ausgebildet sein, Insassen, in der Regel zumindest dem Fahrer, Informationen über eine aktuelle Fahrt und/oder Betriebsparameter des Kraftfahrzeugs bereitzustellen. Weiterhin können den Insassen über das Infotainmentsystem über Ausgabegeräte, bspw. über einen Monitor sowie über Lautsprecher, Audio- und Videodaten dargestellt werden, die keinen Bezug zu der Fahrt oder dem Kraftfahrzeug haben können. Dabei kann das Infotainmentsystem Informationen und/oder Daten aus dem Internet beziehen.

Ein aus der Druckschrift US 2015/307106 A1 bekanntes System ist für ein Fahrzeug vorgesehen und dazu ausgebildet, Empfehlungen für Anwendungen bereitzustellen, die auf einem Verhalten eines Fahrers des Fahrzeugs basieren. Dieses System umfasst ein Computersystem des Fahrzeugs sowie ein Smartphone, die untereinander Signale austauschen. Weiterhin ist vorgesehen, dass das Smartphone über ein Netzwerk mit dem Internet Daten austauscht und dem Computersystem des Fahrzeugs bereitstellt.

Die Druckschrift US 2015/100633 A1 beschreibt ein modulares Infotainmentsystem für ein Fahrzeug, das wiederum ein Multimediamodul aufweist, das über eine Schnittstelle mit einem Smartphone Signale austauscht. Dabei ist es möglich, dass das Smartphone über ein Netzwerk mit dem Internet Daten austauscht.

Die Druckschrift WO 2013/106329 A1 beschreibt ein System, das ein Infotainmentsystem eines Fahrzeugs und ein Mobiltelefon aufweist, die über Schnittstellen miteinander kommunizieren können. Dabei kann auch das Mobiltelefon mit dem Internet direkt Daten austauschen.

Vor diesem Hintergrund war es eine Aufgabe, mit einem Infotainmentsystem Anwendungen aus dem Internet zu nutzen, ohne ein hierzu vorgesehenes Betriebssystem aufweisen zu müssen.

Diese Aufgabe wird mit einem System und einem Verfahren mit den Merkmalen der unabhängigen Patentansprüche gelöst. Ausführungsformen des Systems und des Verfahrens gehen aus den abhängigen Patentansprüchen und der Beschreibung hervor.

Das erfindungsgemäße System gemäß Anspruch 1 umfasst eine Vorrichtung und ein Infotainmentsystem. Das Infotainmentsystem weist eine Recheneinheit, auf der ein erstes Betriebssystem installiert und ausführbar ist, und mindestens eine generische Schnittstelle auf. Die Vorrichtung weist eine Recheneinheit auf, auf der ein zweites Betriebssystem installiert und ausführbar ist, wobei mit dem zweiten Betriebssystem eine funkgestützte Kommunikation mit dem Internet durchführbar ist. Die Vorrichtung weist ebenfalls mindestens eine generische Schnittstelle auf. Die generischen Schnittstellen der Vorrichtung und des Infotainmentsystems sind zueinander kompatibel, wobei mit dem Infotainmentsystem Anwendungen, die für das zweite Betriebssystem vorgesehen und/oder konzipiert sind, bereitstellbar sind. Bei den beiden genannten Betriebssystemen handelt es sich um unterschiedliche Betriebssysteme.

Die Vorrichtung ist für das Infotainmentsystem vorgesehen, das die Recheneinheit aufweist, auf der das erste Betriebssystem installiert und ausführbar ist, wohingegen die Vorrichtung die Recheneinheit aufweist, auf der das zweite Betriebssystem installiert und ausführbar ist, wobei mit dem zweiten Betriebssystem die funkgestützte Kommunikation mit dem Internet durchführbar ist. Die Vorrichtung weist mindestens eine generische Schnittstelle zu dem Infotainmentsystem auf, das ebenfalls mindestens eine generische Schnittstelle aufweist. Dabei sind mit dem Infotainmentsystem Anwendungen, die für das zweite Betriebssystem vorgesehen und/oder konzipiert sind, über die Vorrichtung bereitstellbar und/oder nutzbar. Dabei unterscheidet sich das erste Betriebssystem von dem zweiten Betriebssystem.

Die funkgestützte Kommunikation der Vorrichtung mit dem Internet wird in Ausgestaltung mittelbar über mindestens eine generische Funkschnittstelle des Infotainmentsystems durchgeführt, die üblicherweise als Antenne ausgebildet ist. Dabei ist es möglich, dass das Infotainmentsystem ausgehend von seiner mindestens einen generischen Schnittstelle über die mindestens eine generische Schnittstelle der Vorrichtung der Vorrichtung Daten bereitstellt. Die Kommunikation der Vorrichtung mit dem Internet wird über die mindestens eine generische Funkschnittstelle des Infotainmentsystems ermöglicht, wobei diese mindestens eine generische Funkschnittstelle in Ausgestaltung als Antenne ausgebildet ist. In der Regel kann das Infotainmentsystem über eine erste generische Schnittstelle mit der mindestens einen generischen Schnittstelle der Vorrichtung und über die generische Funkschnittstelle mit dem Internet kommunizieren. Durch die über die generischen Schnittstellen und die generische Funkschnittstelle bereitgestellte Kommunikationskette wird ein Zugang der Vorrichtung zum Internet realisiert.

In Ausgestaltung ist das Infotainmentsystems in einem Kraftfahrzeug angeordnet. Hierbei kann die mindestens eine als Antenne ausgebildete generische Funkschnittstelle des Infotainmentsystems zugleich auch als generische Funkschnittstelle des Kraftfahrzeugs ausgebildet sein, über die die funkgestützte Kommunikation mit dem Internet durchführbar ist.

Somit ist es u. a. möglich, für das Infotainmentsystem über die Vorrichtung eine Plattform zur Nutzung von Anwendungen aus dem Internet zu nutzen, die für das zweite Betriebssystem, nicht aber für das erste Betriebssystem konzipiert sind.

Die Vorrichtung ist für eine Person ausschließlich über das Infotainmentsystem bedienbar und/oder kontrollierbar bzw. zu bedienen und/oder zu kontrollieren.

Die Vorrichtung ist dazu ausgebildet, mit dem Infotainmentsystem über die mindestens eine generische Schnittstelle Daten auszutauschen.

In Ausgestaltung ist die Vorrichtung als tragbares, mobiles Gerät ausgebildet, das über seine mindestens eine generische Schnittstelle unabhängig von dem Infotainmentsystem auch mit einer anderen Einrichtung, bspw. einer weiteren Infotainmenteinrichtung, verbindbar ist, die entsprechend ebenfalls eine generische Schnittstelle aufweist. Dabei kann auf der weiteren Einrichtung dasselbe Betriebssystem wie auf der Vorrichtung oder ein anderes Betriebssystem installiert sein und ausgeführt werden.

Das System weist optional mindestens eine Antenne als generische Funkschnittstelle auf, die als Komponente des Infotainmentsystems ausgebildet ist, wobei die Vorrichtung und das Infotainmentsystem nur über die mindestens eine Antenne des Infotainmentsystems als generische Funkschnittstelle mit dem Internet Daten austauschen. Demnach ist für die Vorrichtung keine eigene Antenne zur Kommunikation mit dem Internet erforderlich, da sie mittelbar über die Antenne des Infotainmentsystems mit dem Internet kommunizieren und somit Daten austauschen kann. Dabei ist es möglich, dass die generische Funkschnittstelle bzw. Antenne des Infotainmentsystems zugleich als generische Funkschnittstelle des Kraftfahrzeugs ausgebildet ist.

Außerdem umfasst das System mindestens ein Eingabegerät, bspw. eine Tastatur und/oder ein berührungsempfindliches Anzeigefeld, das als Komponente des Infotainmentsystems ausgebildet ist, wobei die Vorrichtung und das Infotainmentsystem nur über das mindestens eine Eingabegerät des Infotainmentsystems bedienbar sind, wobei die Person dieses mindestens eine Eingabegerät als Mensch-Maschine-Schnittstelle zur Eingabe von Befehlen und/oder zum Bedienen der Vorrichtung nutzen kann. Demnach ist für die Vorrichtung kein eigenes Eingabegerät erforderlich, da sie über das Eingabegerät des Infotainmentsystems bedienbar ist.

Weiterhin ist vorgesehen, dass das mindestens ein Ausgabegerät, bspw. ein Lautsprecher und/oder ein Anzeigefeld, ggf. ein berührungsempfindliches Anzeigefeld, aufweist, das als Komponente des Infotainmentsystems ausgebildet ist, wobei Informationen bzw. Inhalte der Vorrichtung und des Infotainmentsystems nur über das mindestens eine Ausgabegerät des Infotainmentsystems akustisch und/oder visuell ausgebbar und/oder darstellbar sind. Demnach ist für die Vorrichtung kein eigenes Ausgabegerät erforderlich, da Informationen, die in der Vorrichtung gespeichert und/oder von der Vorrichtung erzeugt werden, über das Eingabegerät des Infotainmentsystems ausgegeben werden.

In Ausgestaltung weist die Vorrichtung mindestens eine elektromechanische generische Schnittstelle und das Infotainmentsystem neben der mindestens einen generischen Funkschnittstelle mindestens eine elektromechanische generische Schnittstelle auf, wobei die Vorrichtung und das Infotainmentsystem über die jeweiligen entsprechenden elektromechanischen generischen Schnittstellen zum Austauschen von Daten miteinander physisch verbindbar bzw. zu verbinden sind. Die mindestens eine elektromechanische generische Schnittstelle der Vorrichtung ist als Stecker oder Buchse und die mindestens eine elektromechanische Schnittstelle des Infotainmentsystems entsprechend als Buchse bzw. Stecker ausgebildet, über die die Vorrichtung und das Infotainmentsystem miteinander mechanisch verbindbar sind sowie drahtgebunden Daten austauschen können.

Alternativ oder ergänzend weist die Vorrichtung mindestens eine als Antenne ausgebildete generische Schnittstelle und das Infotainmentsystem neben der mindestens einen generischen Funkschnittstelle mindestens eine als Antenne ausgebildete generische Schnittstelle auf, wobei die Vorrichtung und das Infotainmentsystem über die als Antennen ausgebildeten generischen Schnittstellen zum gegenseitigen Austauschen der Daten unter Nutzung von elektromagnetischen Wellen miteinander verbindbar bzw. zu verbinden sind. Somit können die Daten zwischen der Vorrichtung und dem Infotainmentsystem über Signale ausgetauscht werden, die über elektromagnetische Wellen übermittelt werden.

Das erfindungsgemäße Verfahren gemäß Anspruch 9 ist zum Betreiben einer Vorrichtung, bspw. einer Ausführungsform der erfindungsgemäßen Vorrichtung, und eines Infotainmentsystems und somit einer Ausführungsform des erfindungsgemäßen Systems vorgesehen. Das Infotainmentsystem weist eine Recheneinheit auf, auf der ein erstes Betriebssystem installiert ist und ausgeführt wird. Dagegen weist die Vorrichtung eine Recheneinheit auf, auf der ein zweites Betriebssystem installiert ist und ausgeführt wird, das sich von dem ersten Betriebssystem unterscheidet, wobei mit dem zweiten Betriebssystem eine funkgestützte Kommunikation mit dem Internet durchgeführt wird. Die Vorrichtung weist mindestens eine generische Schnittstelle auf. Das Infotainmentsystem weist ebenfalls mindestens eine generische Schnittstelle auf. Dabei ist vorgesehen, dass das Infotainmentsystem und die Vorrichtung über die genannten generischen Schnittstellen gegenseitig Daten austauschen. Bei Ausführung des Verfahrens werden mit dem Infotainmentsystem Anwendungen, die für das zweite Betriebssystem vorgesehen und/oder konzipiert sind, bereitgestellt.

Im Rahmen des Verfahrens kommunizieren die Vorrichtung und das Infotainmentsystem über mindestens eine generische Funkschnittstelle des Infotainmentsystems, die zugleich auch als generische Funkschnittstelle des Kraftfahrzeugs ausgebildet sein kann, mit dem Internet.

Hierzu werden die Vorrichtung und das Infotainmentsystem über die generischen Schnittstellen zumindest vorübergehend miteinander verbunden, wobei eine derartige Verbindung auch wieder getrennt werden kann. In Ausgestaltung kann die Vorrichtung nacheinander und/oder abwechselnd auch mit unterschiedlichen Einrichtungen, bspw. anderen Infotainmentsystemen oder Smartphones, verbunden werden.

Mit dem Verfahren kann ein Infotainmentsystem eines Kraftfahrzeugs betrieben werden, wobei die Vorrichtung in dem Kraftfahrzeug angeordnet und über die generische Schnittstelle mit dem Infotainmentsystem verbunden wird. Weiterhin wird die Vorrichtung über das Infotainmentsystem und mindestens eine in der Regel als Antenne ausgebildete generische Funkschnittstelle des Infotainmentsystems mit dem Internet verbunden, wobei die mindestens eine als Antenne ausgebildete generische Funkschnittstelle des Infotainmentsystems zugleich auch als generische Funkschnittstelle des Kraftfahrzeugs ausgebildet sein kann.

Zwischen der Vorrichtung und dem Infotainmentsystem werden als Daten Kontrolldaten zum Kontrollieren der Vorrichtung und/oder des Infotainmentsystems sowie Nutzdaten, bspw. Audio- und/oder Videodaten, ausgetauscht.

Außerdem kann eine Anwendung und/oder Funktion des zweiten Betriebssystems mit dem Infotainmentsystem gesteuert und/oder kontrolliert sowie durchgeführt werden.

In der Vorrichtung ist ein üblicherweise quelloffenes zweites Betriebssystem, bspw. Android® der Firma Google, zur Durchführung einer mobilen Kommunikation installiert und/oder integriert, wobei mit der Vorrichtung Programme und/oder Anwendungen bzw. Apps auf Basis des zweiten Betriebssystems durchführbar sind. Dabei umfasst die Vorrichtung die mindestens eine generische Schnittstelle bzw. einen ersten Schnittstellenteil zur trennbaren Kopplung der Vorrichtung mit dem Infotainmentsystem, das bspw. in dem Kraftfahrzeug angeordnet ist, worüber Daten zwischen dem Infotainmentsystem des Kraftfahrzeugs und der Vorrichtung übertragbar sind, so dass eine Anzeige und/oder Bedienung von Programmen auf Basis des zweiten Betriebssystems mit Hilfe des Infotainmentsystem des Kraftfahrzeugs durchgeführt wird. Demnach ist für die Vorrichtung kein Anzeigefeld bzw. Display und/oder keine Benutzereingabeeinrichtung, bspw. eine Tastatur, erforderlich.

Die Vorrichtung umfasst ferner einen zweiten Schnittstellenteil und somit eine zweite generische Schnittstelle zur trennbaren, bspw. drahtlosen, Kopplung der Vorrichtung mit einer anderen Einrichtung, bspw. einem mobilen Kommunikationsgerät bzw. Smartphone, das ebenfalls als Infotainmentsystem ausgebildet sein und/oder bezeichnet werden kann. In Ausgestaltung kann die vorgestellte Vorrichtung mit dem zweiten Betriebssystem gleichzeitig mit verschiedenen Einrichtungen, bspw. mit dem Infotainmentsystem des Kraftfahrzeugs sowie dem Smartphone, sofern es ebenfalls im Kraftfahrzeug angeordnet ist, über generische Schnittstellen zum Austausch von Daten verbunden werden.

Der erste generische Schnittstellenteil der Vorrichtung ist zur bidirektionalen Übertragung von Daten zwischen dem Infotainmentsystem des Kraftahrzeugs und der Vorrichtung eingerichtet. Hierbei ist der erste Schnittstellenteil dazu eingerichtet, als Daten bspw. visuelle Daten, d. h. Video- bzw. Bilddaten, fahrzeugspezifische Daten, Audiodaten, Mikrophon-Daten und/oder Bedienungs-Interaktionsdaten, die in ein Eingabegerät bzw. Eingabemodul, bspw. bei einer Touchbedienung, des Infotainmentsystems manuell eingebbar sind, zu übertragen. Außerdem ist der erste Schnittstellenteil zur Hardware-Authentifikation im Infotainmentsystem des Kraftfahrzeugs und/oder zur Verbindung der Vorrichtung mit dem Internet über das Infotainmentsystem des Kraftfahrzeugs eingerichtet.

Das Infotainmentsystem für ein Kraftfahrzeug umfasst mit der mindestens einen generischen Schnittstelle einen Schnittstellenteil, der zu dem ersten Schnittstellenteil der beschriebenen Vorrichtung kompatibel ist. Außerdem ist das Infotainmentsystem zur trennbaren Kopplung mit einer Ausführungsform der Vorrichtung eingerichtet.

Das Kraftfahrzeug umfasst eine Ausführungsform des Infotainmentsystems, wobei eine als Antenne ausgebildete generische Funkschnittstelle zur Kommunikation mit dem Internet als Komponente des Infotainmentsystems und des Kraftfahrzeugs ausgebildet sein kann.

Mit der Vorrichtung ist eine leichtgewichtige, wenig verzahnte Integration einer eingebetteten (embedded) Plattform auf Basis des zweiten Betriebssystems in ein bspw. zukünftiges Infotainmentsystem eines Kraftfahrzeugs möglich.

Dabei umfasst die Vorrichtung, die auch als Schnittstellenmodul ausgebildet und/oder bezeichnet werden kann, die mindestens ein generische Schnittstelle, d. h. den ersten Schnittstellenteil und optional den zweiten Schnittstellenteil.

Hierbei kann in Ausgestaltung vorgesehen sein, dass die Vorrichtung bzw. das Schnittstellenmodul von einem Hersteller des Kraftfahrzeugs eingerichtet und/oder definiert ist. Dabei kann die Vorrichtung weiterhin als Infotainmentlink ausgebildet sein und/oder bezeichnet werden.

In Ausgestaltung ist zwischen der Vorrichtung und dem Infotainmentsystem beispielsweise eine unidirektionale und/oder bidirektionale Übertragung von Video- bzw. Bilddaten, von fahrzeugspezifischen Daten, von Audiodaten, Bedienungs-Interaktionsdaten, die über eine Berühr- bzw. Touchbedienung eingebbar sind, und/oder eine Hardware-Authentifikation möglich. Außerdem ist mit dem zweiten Betriebssystem der Vorrichtung eine Verbindung zu dem Internet bereitstellbar. Alternativ oder ergänzend kann die Vorrichtung eine Hochgeschwindigkeits-Hardware-Schnittstelle umfassen, die es einem Kunden ermöglicht, die in die Vorrichtung einzusetzende Recheneinheit bzw. eine einzusetzende Zusatzhardware selbst auszutauschen, um Entwicklungszyklen der Halbleiterindustrie im Kraftfahrzeug folgen zu können, da ansonsten während eines Lebens des Kraftfahrzeugs kein Hardware-Upgrade möglich ist.

Die Vorrichtung kann hierbei eine getrennte Recheneinheit mit mindestens einem Speicher, bspw. RAM und/oder Flash, und die mindestens eine generische Schnittstelle als Verbindungsmodul bzw. Connectivity Modul aufweisen, wobei mit der mindestens einen Schnittstelle mindestens eine Verbindung (Bluetooth und/oder Wifi) über elektromagnetische Wellen bereitstellbar ist, wobei die mindestens eine Schnittstelle als generisches High Speed Hardware Interface, z. B. USB, ausgebildet sein kann.

Das zweite Betriebssystem ist auf der Recheneinheit der Vorrichtung installiert. Außerdem ist das zweite Betriebssystem mit der Recheneinheit ausführbar und/oder darauf lauffähig, wobei das zweite Betriebssystem in eine Umgebung des Infotainmentsystems, auf dessen Recheneinheit das erste Betriebssystem läuft, eingebettet werden kann. Dabei ist in Ausgestaltung vorgesehen, dass sämtliche Datenströme für Ein- und/oder Ausgaben, die über ein Anzeigefeld bzw. Display oder eine Audioschnittstelle, bspw. ein Mikrofon, bereitstellbar sind, über die mindestens eine generische Schnittstelle, bspw. einen Hochgeschwindigkeits- bzw. Highspeed-Schnittstellenteil, in das Infotainmentsystem eingespeist werden. In dem Infotainmentsystem werden diese Datenströme für Ein- und/oder Ausgabeströme koordiniert verarbeitet und über das Anzeigegerät bzw. ein Anzeigefeld des Infotainmentsystems angezeigt bzw. über einen Lautsprecher des Infotainmentsystems akustisch ausgegeben. Akustische und/oder visuelle Inhalte, die über die Datenströme bereitgestellt werden, werden zentral über das Infotainmentsystem des Kraftfahrzeugs dargestellt. Durch die getrennte Recheneinheit der Vorrichtung ist es u. a. möglich, eine Erweiterung eines Flashspeichers für funktionale Erweiterungen über Anwendungen (Apps) des zweiten Betriebssystems unter Nutzung einer sicheren digitalen Speicherkarte bzw. SD- und/oder Micro-SD Karte durch einen Fahrer des Kraftfahrzeugs als Kunde bzw. Nutzer möglich.

Dabei ist es möglich, dass Software (SW) für das zweite Betriebssystem und Anwendungen über generische Schnittstellen, die üblicherweise von einem Anbieter des zweiten Betriebssystems und der Software vorgegeben bzw. definiert werden, in die Vorrichtung integriert werden.

Die Vorrichtung und das Infotainmentsystem sind gegenüber funktionalen und systemischen Änderungen des zweiten Betriebssystems weitgehend unabhängig, wobei zu berücksichtigen ist, dass das zweite Betriebssystem von dessen Anbieter und/oder Hersteller regelmäßig, z. B. in einem sechsmonatigen Rhythmus, weiterentwickelt wird und innerhalb der Vorrichtung aktualisiert werden kann. So kann über einen langen Zeitraum eine Implementierung auf einer Seite des Infotainmentsystems und eine damit verbundene Entwicklung von Software, bspw. des zweiten Betriebssystems, ohne Anpassungen bzw. Änderungen konstant gehalten werden, wobei dem Kunden dennoch ein Zugriff auf die Umgebung der Software bzw. des zweiten Betriebssystems, auch über mehrere Hardware(HW)-Generationen hinweg, gewährleistet wird.

Es ist möglich, die Vorrichtung zu konfigurieren und mit einem Kommunikationsnetz, das von dem Kraftfahrzeug unabhängig ist, zu verbinden. Durch Kombination der Vorrichtung mit dem Infotainmentsystem ist eine vollständige Multimedia-Einheit zur Wiedergabe von Bildern, Musik und/oder Spielen möglich.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination sowie auch in anderen Kombinationen oder in Alleinstellung verwendbar sind, ohne den Rahmen der vorliegenden Erfindung zu verlassen.

Die Erfindung ist anhand von Ausführungsformen in den Zeichnungen schematisch dargestellt und wird unter Bezugnahme auf die Zeichnungen schematisch und ausführlich beschrieben.
Figur 1 zeigt eine erste schematische Darstellung einer Ausführungsform des erfindungsgemäßen Systems, das eine Ausführungsform der erfindungsgemäßen Vorrichtung aufweist.
Figur 2 zeigt eine zweite schematische Darstellung der Ausführungsform des erfindungsgemäßen Systems.
Figur 3 zeigt in schematischer Darstellung ein Detail der erfindungsgemäßen Vorrichtung.

Die Figuren werden zusammenhängend und übergreifend beschrieben, gleichen Komponenten sind dieselben Bezugsziffern zugeordnet.

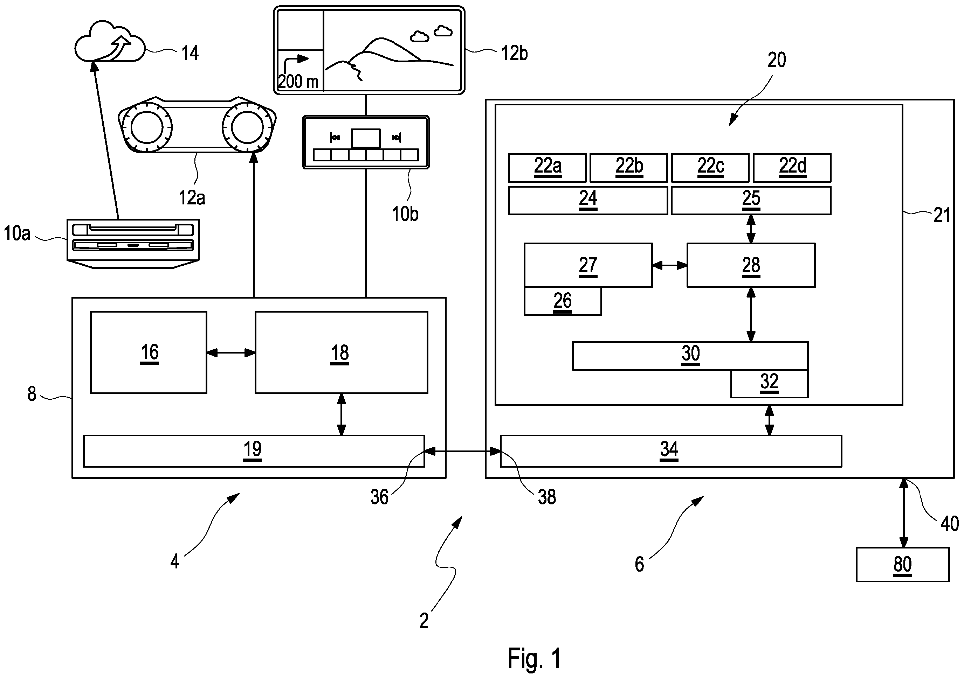

Die in Figur 1 schematisch dargestellte Ausführungsform des erfindungsgemäßen Systems 2 umfasst ein Infotainmentsystem 4, das hier in einem Kraftfahrzeug angeordnet ist, und die Ausführungsform der erfindungsgemäßen Vorrichtung 6.

Das Infotainmentsystem 4 umfasst als erste Komponente eine Recheneinheit 8 und als weitere Komponenten mehrere Eingabegeräte 10a, 10b zur Eingabe von Befehlen durch einen Insassen des Kraftfahrzeugs und Ausgabegeräte 12a, 12b zur audiovisuellen Ausgabe und/oder Darstellung von Inhalten. Dabei umfasst das Infotainmentsystem 4 als ein erstes Eingabegerät 10a ein Laufwerk für eine CD oder DVD. Weiterhin umfasst das Infotainmentsystem 4 eine nicht weiter dargestellte Antenne als generische Funkschnittstelle zum Austausch von Daten mit dem Internet 14 über elektromagnetische Wellen, wobei diese Antenne bzw. generische Funkschnittstelle auch als generische Funkschnittstelle des Kraftfahrzeugs ausgebildet sein kann.

Ein zweites Eingabegerät 10b ist hier als berührungsempfindliches Anzeigefeld ausgebildet, das auch als Touchscreen bezeichnet werden kann. Ein erstes Ausgabegerät 12a ist hier als Instrumententafel des Kraftfahrzeugs und ein zweites Ausgabegerät 12b als Navigationsgerät ausgebildet.

Auf der Recheneinheit 8 ist ein erstes Betriebssystem 16 installiert, das von einem Hersteller des Infotainmentsystems 4 und/oder des Kraftfahrzeugs bereitgestellt wird. Bei Ausführung des ersten Betriebssystems 16 werden unterschiedliche Aufgaben 18, bspw. Sicherheitsfunktionen für das Kraftfahrzeug, ein Anzeigemanagement, ein Leistungsmanagement und/oder ein Klangmanagement gesteuert, über die wiederum unterschiedliche Daten 19, bspw. für eine Ein- und/oder Ausgabe eines Anzeigefelds eines Ausgabegeräts 10a, 10b, eine Klangausgabe, Funktionen des Kraftfahrzeugs und/oder eine Authentifizierung ausgetauscht werden.

Die Vorrichtung 6 des Systems 2 umfasst eine Recheneinheit 21, auf der ein zweites Betriebssystem 20 installiert ist, das eine in das Kraftfahrzeug eingebettete Software-Architektur aufweist. Das zweite Betriebssystem 20 umfasst hier verschiedene Anwendungen 22a, 22b, 22c, 22d bzw. Applikationen, eine Programmschnittstelle 24 bzw. API (Application Programming Interface) für das zweite Betriebssystem 20, eine Programmschnittstelle 25 bzw. API (Application Programming Interface) für das Kraftfahrzeug, eine Dienstsoftware 27 für das zweite Betriebssystem 20, eine Hardwareabstraktionsschicht 26 bzw. HAL (Hardware Abstraction Layer) für das zweite Betriebssystem 20, eine Dienstsoftware 28 für das Kraftfahrzeug, eine Dienstsoftware 30 für ein Netzwerk des Kraftfahrzeugs und eine Hardwareabstraktionsschicht 32 bzw. HAL (Hardware Abstraction Layer) für das Kraftfahrzeug. Mit dem zweiten Betriebssystem 20 können unterschiedliche Daten 34, bspw. eine Ein- und/oder Ausgabe eines Anzeigefelds eines Ausgabegeräts 10a, 10b, eine Klangausgabe, Funktionen des Kraftfahrzeugs und/oder eine Authentifizierung ausgetauscht werden.

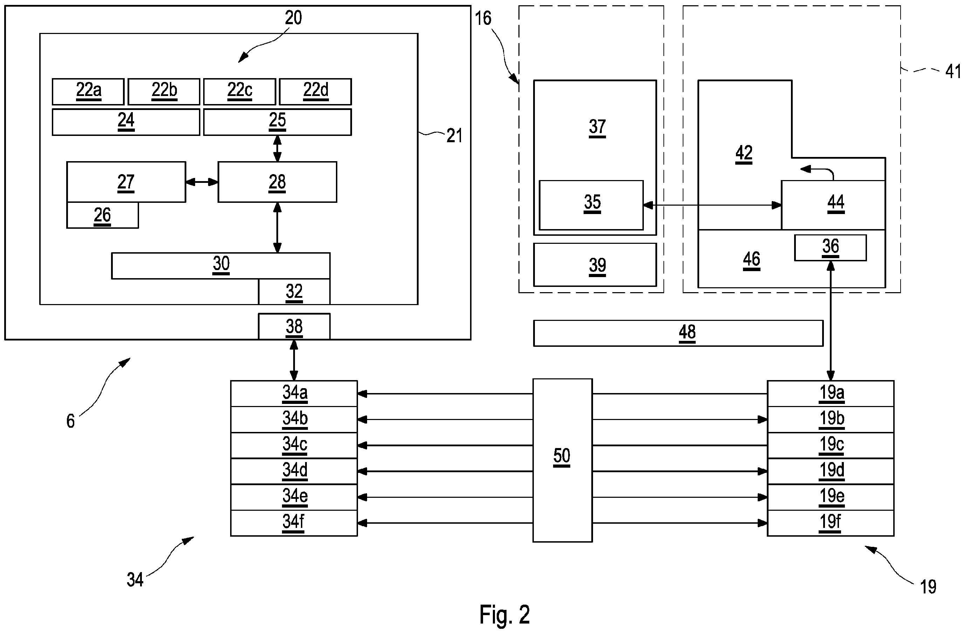

Das Infotainmentsystem 4 weist eine generische Schnittstelle 36 und die Vorrichtung 6 eine generische Schnittstelle 38 auf, über die das Infotainmentsystem 4 und die Vorrichtung 6 Daten austauschen. Außerdem weist die Vorrichtung 6 eine weitere generische Schnittstelle 40 auf, über die die Vorrichtung 6 auch mit einer weiteren Einrichtung 80, hier einem Smartphone, Daten austauschen kann, wobei die Einrichtung 80 hierfür eine generische Schnittstelle aufweist, wie in Figur 2 dargestellt.

In der schematischen Darstellung aus Figur 2 sind neben der Vorrichtung 6, weitere Details des ersten Betriebssystems 16 auf der Recheneinheit 8 des Infotainmentsystems 4 gezeigt. Dabei umfasst das erste Betriebssystem 16 ein Haupt-Softwaremodul 37 mit einer eingebetteten Programmschnittstelle 35 bzw. API (Application Programming Interface) für das zweite Betriebssystem 20 und ein weiteres Softwaremodul 39. Außerdem ist hier vorgesehen, dass auf der Recheneinheit 8 ein Systemmodul 41 installiert ist, das ursprüngliche Funktionen 42, bspw. zur Darstellung von audiovisuellen Daten, und eine eingebettete Programmschnittstelle 44 bzw. API (Application Programming Interface) für das zweite Betriebssystem 20 umfasst. Weiterhin umfasst das Systemmodul 41 ein weiteres Softwaremodul 46 für die generische Schnittstelle 36 des Infotainmentsystems 4. Dem ersten Betriebssystem 16 und dem Systemmodul 41 sind hier ein Hypervisor 48 zugeordnet.

Die generische Schnittstelle 36 des Infotainmentsystems und die generische Schnittstelle 38 der Vorrichtung 6 sind hier über ein serielles Bussystem 50, bspw. USB, miteinander verbunden. Über die beiden generischen Schnittstellen 36, 38 werden der Vorrichtung 6 von dem Infotainmentsystem 4 Daten 19a, 34a für eine Anzeige und Daten 19c, 34c für eine Audioausgabe bereitgestellt. Außerdem werden zwischen dem Infotainmentsystem 4 und der Vorrichtung 6 Daten 19b, 34b zum Bedienen eines Eingabegeräts 10a, 10b, Daten 19d, 34d zum Steuern des Kraftfahrzeugs, Daten 19e, 34e aus dem Internet sowie Daten 19f, 34f zur Authentifizierung ausgetauscht.

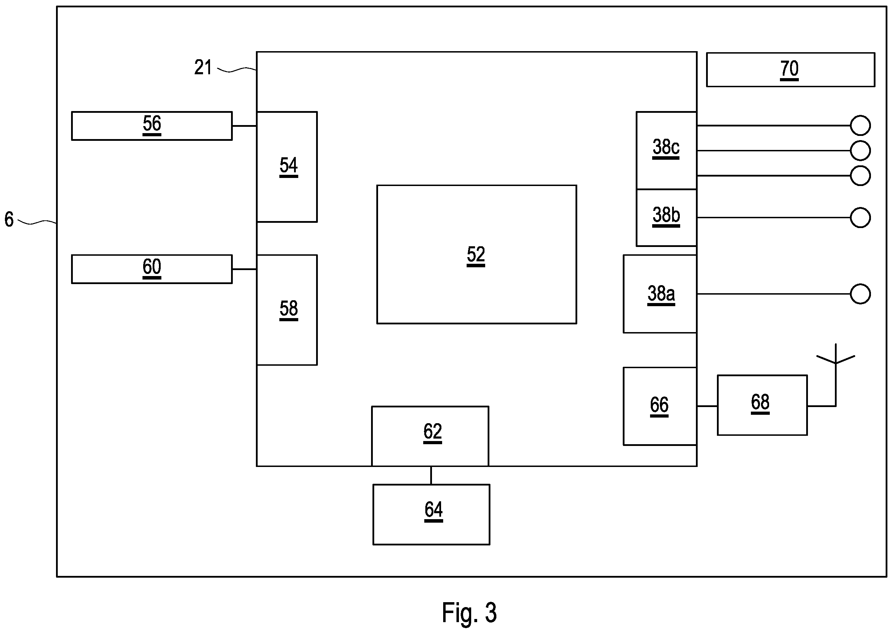

In Figur 3 sind weitere Details der Vorrichtung 6 schematisch dargestellt. Dabei umfasst die Recheneinheit 21, einen Rechenkern 52 (Multi Core), ein MEM 54, über den die Recheneinheit 21 mit einem ersten Speicher 56 und ein MMC 58, über den die Recheneinheit 21 mit einem zweiten Speicher 60 verbunden ist. Über eine Energieverbindung 62 ist die Recheneinheit 21 mit einer Energiequelle 64 des Infotainmentsystems 4 verbindbar. Über eine Kommunikationsverbindung 66 ist die Recheneinheit 21 mit einer Antenne 68 als generische Funkschnittstelle des Infotainmentsystems 4 verbindbar, über die die Recheneinheit 21 mit dem Internet 14 Daten austauschen kann. Weiterhin umfasst die Recheneinheit 21 eine erste generische Schnittstelle 38a (HDMI), eine zweite generische Schnittstelle 38b (SD) und eine dritte generische Schnittstelle 38c (USB). Außerdem umfasst die Vorrichtung 6 eine Hardware-Authentifikation 70 zum Authentifizieren von Hardware.

## Patentansprüche

1. System, das eine Vorrichtung (6) und ein Infotainmentsystem (4) eines Kraftfahrzeugs umfasst, wobei das Infotainmentsystem (4) eine Recheneinheit (8) aufweist, auf der ein erstes Betriebssystem (16) installiert und ausführbar ist, wobei das Infotainmentsystem (4) mindestens eine generische Schnittstelle (36) aufweist, wobei die Vorrichtung (6) eine Recheneinheit (21) aufweist, auf der ein zweites Betriebssystem (20) installiert und ausführbar ist, wobei mit dem zweiten Betriebssystem (20) eine Kommunikation mit dem Internet (14) durchführbar ist, wobei die Vorrichtung (6) mindestens eine generische Schnittstelle (38, 38a, 38b, 38c) aufweist, wobei das Infotainmentsystem (4) und die Vorrichtung (6) über die generischen Schnittstellen (36, 38, 38a, 38b, 38c) gegenseitig Daten austauschen, wobei das System (2) eine Antenne als generische Funkschnittstelle aufweist, die als Komponente des Infotainmentsystems (4) ausgebildet ist,
**dadurch gekennzeichnet, dass** die Vorrichtung (6) und das Infotainmentsystem (4) nur über die eine Antenne des Infotainmentsystems (4) mit dem Internet (14) Daten (19, 19a, 19b, 19c, 19d 19e, 19f, 34, 34a, 34b, 34c, 34d, 34e, 34f) austauschen, wobei die Vorrichtung (6) über die Antenne des Infotainmentsystems (4) mit dem Internet Daten mittelbar austauscht, wobei über das Infotainmentsystem (4) Anwendungen, die für das zweite Betriebssystem (20) konzipiert sind, bereitstellbar sind.

2. System nach Anspruch 1, das mindestens ein Eingabegerät (10a, 10b), bspw. eine Tastatur und/oder ein berührungsempfindliches Anzeigefeld, aufweist, das als Komponente des Infotainmentsystems (4) ausgebildet ist, wobei die Vorrichtung (6) und das Infotainmentsystem (4) nur über das mindestens eine Eingabegerät (10a, 10b) des Infotainmentsystems (4) bedienbar sind.

3. System nach Anspruch 1 oder 2, das mindestens ein Ausgabegerät (12a, 12b), insbesondere einen Lautsprecher, ein ggf. berührungsempfindliches Anzeigefeld und/oder einen Dreh-Drück-Steller, aufweist, das als Komponente des Infotainmentsystems (4) ausgebildet ist, wobei Informationen bzw. Inhalte der Vorrichtung (6) und des Infotainmentsystems (4) nur über das mindestens eine Ausgabegerät (12a,12b) des Infotainmentsystems (4) ausgebbar sind.

4. System nach einem der Ansprüche 1 bis 3, bei dem die Vorrichtung (6) mindestens eine elektromechanische generische Schnittstelle (38, 38a, 38b, 38c) und das Infotainmentsystem (4) mindestens eine elektromechanische generische Schnittstelle (36) aufweist, wobei die Vorrichtung (6) und das Infotainmentsystem (4) über die elektromechanischen generischen Schnittstellen (38, 38a, 38b, 38c) zum Austauschen von Daten (19, 19a, 19b, 19c, 19d 19e, 19f, 34, 34a, 34b, 34c, 34d, 34e, 34f) miteinander physisch verbindbar sind.

5. System nach einem der Ansprüche 1 bis 4, bei dem die Vorrichtung (6) mindestens eine als Antenne ausgebildete generische Schnittstelle und das Infotainmentsystem (4) mindestens eine als Antenne ausgebildete generische Schnittstelle aufweist, wobei die Vorrichtung (6) und das Infotainmentsystem (4) über die als Antennen ausgebildeten generischen Schnittstellen zum Austauschen der Daten (19, 19a, 19b, 19c, 19d 19e, 19f, 34, 34a, 34b, 34c, 34d, 34e, 34f) unter Nutzung von elektromagnetischen Wellen miteinander verbindbar sind.

6. System nach einem der voranstehenden Ansprüche, bei dem die Vorrichtung (6) über das Infotainmentsystem (4) bedienbar ist.

7. System nach einem der voranstehenden Ansprüche, bei dem die Vorrichtung (6) dazu ausgebildet ist, mit dem Infotainmentsystem (4) über die mindestens eine generische Schnittstelle (38, 38a, 38b, 38c) Daten (19, 19a, 19b, 19c, 19d 19e, 19f, 34, 34a, 34b, 34c, 34d, 34e, 34f) auszutauschen.

8. System nach einem der voranstehenden Ansprüche, bei dem die Vorrichtung (6) als tragbares, mobiles Gerät ausgebildet ist, das über seine mindestens eine generische Schnittstelle (38, 38a, 38b, 38c) unabhängig von dem Infotainmentsystem (4) auch mit einer anderen Infotainmenteinrichtung verbindbar ist.

9. Verfahren zum Betreiben einer Vorrichtung (6) und eines Infotainmentsystems (4) eines Kraftfahrzeugs, wobei das Infotainmentsystem (4) eine Recheneinheit (8) aufweist, auf der ein erstes Betriebssystem (16) installiert ist und ausgeführt wird, wobei die Vorrichtung (6) eine Recheneinheit (21) aufweist, auf der ein zweites Betriebssystem (20) installiert ist und ausgeführt wird, wobei mit dem zweiten Betriebssystem (20) eine funkgestützte Kommunikation mit dem Internet (14) durchgeführt wird, wobei die Vorrichtung (6) mindestens eine generische Schnittstelle (38, 38a, 38b, 38c) und das Infotainmentsystem (4) mindestens eine generische Schnittstelle (36) aufweisen, wobei das Infotainmentsystem (4) und die Vorrichtung (6) über die generischen Schnittstellen (36, 38, 38a, 38b, 38c) gegenseitig Daten austauschen, wobei eine Antenne als generische Funkschnittstelle des Infotainmentsystems (4) ausgebildet ist,
**dadurch gekennzeichnet, dass** die Vorrichtung (6) und das Infotainmentsystem (4) nur über die eine Antenne des Infotainmentsystems (4) mit dem Internet (14) Daten (19, 19a, 19b, 19c, 19d 19e, 19f, 34, 34a, 34b, 34c, 34d, 34e, 34f) austauschen, wobei die Vorrichtung (6) über die Antenne des Infotainmentsystems (4) mit dem Internet Daten mittelbar austauscht, wobei über das Infotainmentsystem (4) Anwendungen, die für das zweite Betriebssystem (20) konzipiert sind, bereitgestellt werden.

10. Verfahren nach Anspruch 9, mit dem das Infotainmentsystem (4) des Kraftfahrzeugs betrieben wird, wobei die Vorrichtung (6) in dem Kraftfahrzeug angeordnet und über die generischen Schnittstelle (36, 38, 38a, 38b, 38c) mit dem Infotainmentsystem (4) verbunden wird.

11. Verfahren nach Anspruch 10, bei dem die funkgestützte Kommunikation zwischen der Vorrichtung (6) und dem Internet über die eine als Antenne ausgebildete generische Funkschnittstelle des Infotainmentsystems (4) und/oder des Kraftfahrzeugs durchgeführt wird.

12. Verfahren nach einem der Ansprüche 9 bis 11, bei dem zwischen der Vorrichtung (6) und dem Infotainmentsystem (4) als Daten (19, 19a, 19b, 19c, 19d 19e, 19f, 34, 34a, 34b, 34c, 34d, 34e, 34f) Kontrolldaten zum Kontrollieren der Vorrichtung (6) und/oder des Infotainmentsystems (4) sowie Nutzdaten, bspw. Audio- und/oder Videodaten, ausgetauscht werden.

## Claims

1. System which comprises a device (6) and an infotainment system (4) of a motor vehicle, wherein the infotainment system (4) has a computing unit (8) on which a first operating system (16) is installed and can be carried out, wherein the infotainment system (4) has at least one generic interface (36), wherein the device (6) has a computing unit (21) on which a second operating system (20) is installed and can be carried out, wherein a communication with the Internet (14) can be performed with the second operating system (20), wherein the device (6) has at least one generic interface (38, 38a, 38b, 38c), wherein the infotainment system (4) and the device (6) exchange data with each other via the generic interfaces (36, 38, 38a, 38b, 38c), wherein the system (2) has an antenna as a generic radio interface which is designed as a component of the infotainment system (4),
**characterised in that** the device (6) and the infotainment system (4) exchange data (19, 19a, 19b, 19c, 19d, 19e, 19f, 34, 34a, 34b, 34c, 34d, 34e, 34f) with the Internet (14) only via the one antenna of the infotainment system (4), wherein the device (6) exchanges data indirectly with the Internet via the antenna of the infotainment system (4), wherein applications, which are conceived for the second operating system (20), can be provided via the infotainment system (4).

2. System according to claim 1, which has at least one input device (10a, 10b), e.g. a keyboard and/or a touch-sensitive display field, which is designed as a component of the infotainment system (4), wherein the device (6) and the infotainment system (4) can be operated only via the at least one input device (10a, 10b) of the infotainment system (4).

3. System according to claim 1 or 2, which has at least one output device (12a, 12b), in particular a loudspeaker, an optionally touch-sensitive display field and/or a turn-push actuator, which is designed as a component of the infotainment system (4), wherein information or contents of the device (6) and of the infotainment system (4) can be outputted only via the at least one output device (12a,12b) of the infotainment system (4).

4. System according to any of claims 1 to 3, in which the device (6) has at least one electromagnetic generic interface (38, 38a, 38b, 38c) and the infotainment system (4) has at least one electromagnetic generic interface (36), wherein the device (6) and the infotainment system (4) can be physically connected with one another via the electromagnetic generic interfaces (38, 38a, 38b, 38c) for exchanging data (19, 19a, 19b, 19c, 19d, 19e, 19f, 34, 34a, 34b, 34c, 34d, 34e, 34f).

5. System according to any of claims 1 to 4, in which the device (6) has at least one generic interface designed as an antenna and the infotainment system (4) has at least one generic interface designed as an antenna, wherein the device (6) and the infotainment system (4) can be connected with one another via the generic interfaces designed as antennas for exchanging the data (19, 19a, 19b, 19c, 19d, 19e, 19f, 34, 34a, 34b, 34c, 34d, 34e, 34f) using electromagnetic waves.

6. System according to any of the preceding claims, in which the device (6) can be operated via the infotainment system (4).

7. System according to any of the preceding claims, in which the device (6) is designed to exchange data (19, 19a, 19b, 19c, 19d, 19e, 19f, 34, 34a, 34b, 34c, 34d, 34e, 34f) with the infotainment system (4) via the at least one generic interface (38, 38a, 38b, 38c).

8. System according to any of the preceding claims, in which the device (6) is designed as a portable mobile device which can be connected via its at least one generic interface (38, 38a, 38b, 38c), independently of the infotainment system (4), also with another infotainment device.

9. Method for operating a device (6) and an infotainment system (4) of a motor vehicle, wherein the infotainment system (4) has a computing unit (8) on which a first operating system (16) is installed and is carried out, wherein the device (6) has a computing unit (21) on which a second operating system (20) is installed and is carried out, wherein with the second operating system (20) a radio-supported communication is performed with the Internet (14), wherein the device (6) has at least one generic interface (38, 38a, 38b, 38c) and the infotainment system (4) has at least one generic interface (36), wherein the infotainment system (4) and the device (6) exchange data with one another via the generic interfaces (36, 38, 38a, 38b, 38c), wherein an antenna is designed as a generic radio interface of the infotainment system (4), **characterised in that** the device (6) and the infotainment system (4) exchange data (19, 19a, 19b, 19c, 19d, 19e, 19f, 34, 34a, 34b, 34c, 34d, 34e, 34f) with the Internet (14) only via the one antenna of the infotainment system (4), wherein the device (6) exchanges data directly with the Internet via the antenna of the infotainment system (4), wherein applications which are conceived for the second operating system (20) are provided via the infotainment system (4).

10. Method according to claim 9, with which the infotainment system (4) of the motor vehicle is operated, wherein the device (6) is arranged in the motor vehicle and is connected with the infotainment system (4) via the generic interface (36, 38, 38a, 38b, 38c).

11. Method according to claim 10, in which the radio-supported communication between the device (6) and the Internet is performed via the one generic radio interface, designed as an antenna, of the infotainment system (4) and/or of the motor vehicle.

12. Method according to any of claims 9 to 11, in which control data for controlling the device (6) and/or the infotainment system (4), as well as payload data, e.g. audio and/or video data, are exchanged between the device (6) and the infotainment system (4) as data (19, 19a, 19b, 19c, 19d, 19e, 19f, 34, 34a, 34b, 34c, 34d, 34e, 34f).

## Revendications

1. Système, qui comprend un dispositif (6) et un système d'info-divertissement (4) d'un véhicule automobile, dans lequel le système d'info-divertissement (4) présente une unité de calcul (8), sur laquelle un premier système d'exploitation (16) est installé et peut être exécuté, dans lequel le système d'info-divertissement (4) présente au moins une interface générique (36), dans lequel le dispositif (6) présente une unité de calcul (21), sur laquelle un second système d'exploitation (20) est installé et peut être exécuté, dans lequel une communication avec le second système d'exploitation (20) peut être réalisée avec l'Internet (14), dans lequel le dispositif (6) présente au moins une interface générique (38, 38a, 38b, 38c), dans lequel le système d'info-divertissement (4) et le dispositif (6) échangent des données mutuellement via les interfaces génériques (36, 38, 38a, 38b, 38c), dans lequel le système (2) présente une antenne sous la forme d'une interface radio générique, qui est réalisée sous la forme d'un composant du système d'info-divertissement (4),
**caractérisé en ce que** le dispositif (6) et le système d'info-divertissement (4) échangent des données (19, 19a, 19b, 19c, 19d, 19e, 19f, 34, 34a, 34b, 34c, 34d, 34e, 34f) avec l'Internet (14) uniquement par l'intermédiaire d'une antenne du système d'info-divertissement (4), dans lequel le dispositif (6) échange indirectement des données avec l'Internet par l'intermédiaire de l'antenne du système d'info-divertissement (4), dans lequel des applications, qui sont conçues pour le second système d'exploitation (20) peuvent être fournies via le système d'info-divertissement (4).

2. Système selon la revendication 1, qui présente au moins un appareil d'entrée (10a, 10b), par exemple un clavier et/ou un panneau d'affichage tactile, qui est réalisé sous la forme d'un composant du système d'info-divertissement (4), dans lequel le dispositif (6) et le système d'info-divertissement (4) peuvent être actionnés uniquement via le au moins un appareil d'entrée (10a, 10b) du système d'info-divertissement (4).

3. Système selon la revendication 1 ou 2, qui présente au moins un appareil de sortie (12a, 12b), en particulier un haut-parleur, un écran d'affichage facultativement tactile et/ou un bouton-poussoir rotatif, qui est réalisé sous la forme d'un composant du système d'info-divertissement (4), dans lequel des informations ou un contenu du dispositif (6) et du système d'info-divertissement (4) peuvent être délivrés uniquement via le au moins un appareil de sortie (12a,12b) du système d'info-divertissement (4).

4. Système selon l'une quelconque des revendications 1 à 3, dans lequel le dispositif (6) présente au moins une interface générique électromécanique (38, 38a, 38b, 38c) et le système d'info-divertissement (4) présente au moins une interface générique électromécanique (36), dans lequel le dispositif (6) et le système d'info-divertissement (4) peuvent être reliés physiquement l'un à l'autre pour échanger des données (19, 19a, 19b, 19c, 19d 19e, 19f, 34, 34a, 34b, 34c, 34d, 34e, 34f) via les interfaces génériques électromécaniques (38, 38a, 38b, 38c).

5. Système selon l'une quelconque des revendications 1 à 4, dans lequel le dispositif (6) présente au moins une interface générique réalisée sous la forme d'une antenne et le système d'info-divertissement (4) présente au moins une interface générique réalisée sous la forme d'une antenne, dans lequel le dispositif (6) et le système d'info-divertissement (4) peuvent être reliés l'un à l'autre via les interfaces génériques réalisées sous la forme d'antenne pour échanger les données (19, 19a, 19b, 19c, 19d 19e, 19f, 34, 34a, 34b, 34c, 34d, 34d, 34e, 34f) en utilisant des ondes électromagnétiques.

6. Système selon l'une quelconque des revendications précédentes, dans lequel le dispositif (6) peut être actionné via le système d'info-divertissement (4).

7. Système selon l'une quelconque des revendications précédentes, dans lequel le dispositif (6) est réalisé de manière à échanger des données (19, 19a, 19b, 19c, 19d 19e, 19f, 34, 34a, 34b, 34c, 34d, 34e, 34f) avec le système d'info-divertissement (4) via la au moins une interface générique (38, 38a, 38b, 38c).

8. Système selon l'une quelconque des revendications précédentes, dans lequel le dispositif (6) est réalisé sous la forme d'un appareil mobile portatif qui peut être relié également avec un autre dispositif d'info-divertissement via sa au moins une interface générique (38, 38a, 38b, 38c), indépendamment du système d'info-divertissement (4).

9. Procédé d'exploitation d'un dispositif (6) et d'un système d'info-divertissement (4) d'un véhicule automobile, dans lequel le système d'info-divertissement (4) présente une unité de calcul (8), sur laquelle un premier système d'exploitation (16) est installé et exécuté, dans lequel le dispositif (6) présente une unité de calcul (21), sur laquelle un second système d'exploitation (20) est installé et exécuté, dans lequel une communication radio avec l'Internet (14) est réalisée avec le second système d'exploitation (20), dans lequel le dispositif (6) présente au moins une interface générique (38, 38a, 38b, 38c) et le système d'info-divertissement (4) présente au moins une interface générique (36), dans lequel le système d'info-divertissement (4) et le dispositif (6) échangent des données mutuellement via les interfaces génériques (36, 38, 38a, 38b, 38c), dans lequel une antenne est réalisée sous la forme d'une interface radio générique du système d'info-divertissement (4),
**caractérisé en ce que** le dispositif (6) et le système d'info-divertissement (4) échangent des données (19, 19a, 19b, 19c, 19d, 19e, 19f, 34, 34a, 34b, 34c, 34d, 34e, 34f) avec l'Internet (14) uniquement par l'intermédiaire de l'une antenne du système d'info-divertissement (4), dans lequel le dispositif (6) échange indirectement des données avec l'Internet par l'intermédiaire de l'antenne du système d'info-divertissement (4), dans lequel des applications, qui sont conçues pour le second système d'exploitation (20), sont fournies via le système d'info-divertissement (4).

10. Procédé selon la revendication 9, avec lequel le système d'info-divertissement (4) du véhicule automobile est exploité, dans lequel le dispositif (6) est agencé dans le véhicule automobile et relié au système d'info-divertissement (4) via l'interface générique (36, 38, 38a, 38b, 38c).

11. Procédé selon la revendication 10, dans lequel la communication radio entre le dispositif (6) et l'Internet est réalisée via l'interface radio générique réalisée sous la forme d'une antenne du système d'info-divertissement (4) et/ou du véhicule automobile.

12. Procédé selon l'une quelconque des revendications 9 à 11, dans lequel entre le dispositif (6) et le système d'info-divertissement (4), des données de commande sous forme de données (19, 19a, 19b, 19c, 19d, 19e, 19f, 34, 34a, 34b, 34c, 34d, 34e, 34f) sont échangées pour commander le dispositif (6) et/ou le système d'info-divertissement (4), ainsi que des données d'utilisateur, par exemple des données audio et/ou vidéo.
